(19) Europäisches Patentamt

European Patent Office

Office européen des brevets

(11) Veröffentlichungsnummer: **0 197 292**
**A1**

(12) **EUROPÄISCHE PATENTANMELDUNG**

(21) Anmeldenummer: 86102758.9

(51) Int. Cl.⁴: **A 01 F 12/44**

(22) Anmeldetag: 03.03.86

(30) Priorität: 14.03.85 US 711632

(43) Veröffentlichungstag der Anmeldung:
15.10.86 Patentblatt 86/42

(84) Benannte Vertragsstaaten:
BE DE FR GB IT SE

(71) Anmelder: Klöckner-Humboldt-Deutz AG
Zweigniederlassung Fahr

D-7702 Gottmadingen(DE)

(72) Erfinder: Huhman, Michael L.
12o13 E. 56th Terrace
Kansas City Missouri 64133(US)

(54) Abwärts und rückwärts gerichteter Luftstrom für eine Erntemaschine mit vertikal versetzten Förderwalzen.

(57) Eine Axialfluß-Dreschmaschine verwendet ein Paar sich gegeneinander drehender und vertikal verschobener Beschleunigungswalzen (26, 27), um das gedroschene Material vom Dreschteil abwärts und vorwärts zur Kornpfanne (61) des Reinigungsteils zu befördern. Eine laminare Luftströmung (55) wird abwärts und rückwärts durch das beschleunigte und ausgedroschene Material geführt, um eine effektive Trennung von Spreu und leichten Strohpartikeln vom Korn zu bewirken.

Klöckner-Humboldt-Deutz AG

Abwärts und rückwärts gerichteter Luftstrom
für eine Erntemaschine
mit vertikal versetzten Förderwalzen

Diese Erfindung bezieht sich auf eine landwirtschaftliche Erntemaschine nach den Merkmalen des Oberbegriffes des Patentanspruches 1.

Sie bezieht sich auf die Art der Verwendung eines
Luftstroms, um Spreu und Strohpartikel aus dem ausgedroschenen Material zu trennen, welches von einem
Beschleunigungs-walzen-Paar abgegeben wird.

- 2 -

Die Verwendung von Beschleunigungswalzen in einer Erntemaschine, um Korn und Spreu aus dem Dreschkäfig durch einen im allgemeinen in horizontaler Richtung verlaufenden Luftstrom zu befördern und dadurch eine bestmögliche Trennung der leichten Spreu und ähnlichem vom Korn zu erreichen, ist bestens bekannt. US-Patent 4,27o,551, erteilt am 2.Juni 1981 an D.K. Johnston und D.A. Sudermann zeigt eine solche Maschine. In vorgenanntem Patent wurde am Ausgang des Luftkanals, in welchem der zur Trennung verwendete Luftstrom verläuft, ein Ablenkblech verwendet, um die Luft in einer ausreichenden Entfernung unterhalb der Beschleunigungswalzen-Abgabeöffnung quer durch das beschleunigte Material (Korn und Spreu) zu lenken und das Strömen der Reinigungsluft aufwärts durch die Förderwalzen hindurch zum Dreschbereich zu beschränken. Das US-Patent 4,458,697, erteilt am 1o.Juli 1984 an L.R. James für einen "Axialfluß-Mähdrescher mit vertikal verschobenen Beschleunigungswalzen" illustriert und beschreibt die Verwendung vertikal verschobener Beschleunigungswalzen, wobei die Versetzung des Reinigungsteils der Maschine nach vorne ermöglicht wird und dadurch eine Ver-

- 3 -

kürzung der Gesamtlänge der Maschine erlaubt. In dem zuletzt genannten Patent werden Korn und Spreu abwärts und vorwärts mittels der vertikal versetzten Beschleunigungswalzen durch einen nach hinten und leicht aufwärts gerichteten Luftstrom beschleunigt. Es wurde festgestellt, daß der in dieser Richtung verlaufende Luftstrom dazu führt, daß unerwünschte Luft durch die Beschleunigungswalzen hindurch nach oben strömt, was die Abwärtsbewegung von Korn und Spreu zu den Förderwalzen verlangsamt und in der Bedienstation der Erntemaschine vorne extrem schmutzige Luft erzeugt. Der in dieser Richtung verlaufende Luftstrom führt auch zu einer übermäßigen Turbulenz im Luftkanalaustrittsbereich, was zu einer weniger wirksamen Trennung von Spreu und Strohpartikeln aus dem beschleunigten Korn führt. Außerdem besteht die Tendenz, daß der leicht nach oben und hinten gerichtete Luftstrom zusammen mit Spreu und Strohpartikeln gleichzeitig auch etwas Korn zum rückwärtigen Ende der Erntemaschine wegbläst.

Aufgabe dieser Erfindung ist es (a) eine Verringerung der Turbulenz am Schnittpunkt des Luftstroms aus dem oberen Luftkanal mit dem ausgedroschenen und beschleunigten Material und (b) weniger aufwärts zum Dresch-

- 4 -

- 4 -

teil fließende Luft, um die Verschmutzung der Luft im vorderen Teil der Mäh- und Dreschmaschine zu verringern, dort wo sich der Bedienungsmann der Maschine befindet, und um eine Verzögerung in der Bewegung des ausgedroschenen Materials zu den Beschleunigungswalzen zu vermeiden.

Diese Aufgabe der Erfindung wird dadurch gelöst, daß oberhalb der Kornpfanne und in bezug zum Dreschkorb unterhalb vordere und hintere, gegeneinander drehende Beschleunigungswalzen angeordnet sind. Die Beschleunigungswalzen sind auf einem Paar im allgemeinen horizontal und parallel verlaufenden Achsen angeordnet, und nehmen zwischen sich das aus dem Dreschkorb ausgedroschene Material auf. Die Achse der vorderen Beschleunigungswalze ist oberhalb der Achse der hinteren Beschleunigungswalze vertikal verschoben, wodurch das ausgedroschene Material nach unten und vorne auf die Kornpfanne beschleunigt wird. Es sind Gebläseeinheiten vorgesehen, die einen unteren Luftkanal umfassen, welcher einen Luftstrom nach hinten und oben durch das Sieb leitet, und einen oberen Luftkanal, der einen

- 5 -

in einem vorherbestimmten Abstand unterhalb und parallel zu einer durch die Achsen der Beschleunigungswalzen verlaufenden Ebene liegenden Austrittsteil besitzt. DerAustrittsteil leitet eine Schicht laminarer Luftströmung nach hinten und unten zu den Sieben quer durch das von den Beschleunigungswalzen beschleunigte Dreschmaterial und schräg dazu, wodurch Spreu und Strohpartikel nach hinten geblasen und somit von den Getreidekörnern getrennt werden, die nach unten auf die Kornpfanne gelangen. Es ist wünschenswert, daß die vom unteren Luftkanal aufwärts durch das Sieb strömende Luftmenge groß genug ist, um zu verhindern, daß der Luftstrom des oberen Luftkanals Spreu und Strohpartikel auf die Oberseite des Siebes auftreffen läßt.

Ein Ausführungsbeispiel der Erfindung ist an Hand der Zeichnungen dargestellt und näher beschrieben.

Die Fig. zeigt einen Teilschnitt auf einer vertikalen Längsebene durch die Erntemaschine.

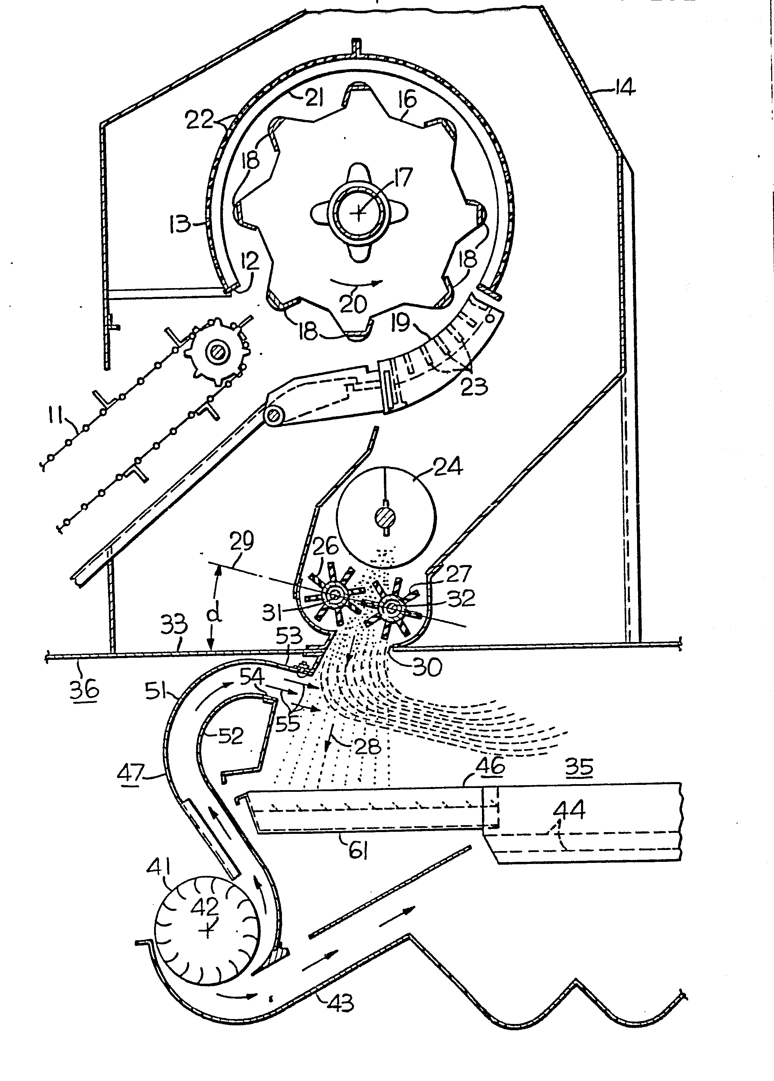

Wie in der Zeichnung dargestellt, wird das Erntematerial mittels eines Förderbandes 11 zu einer Eintrittsöffnung 12 eines mit Löchern versehenen zylindrischen Käfigs 13 befördert, der in einem Verarbeitungsgehäuse 14 bzw. einem Dreschsektor eines Axialfluß-Mähdreschers montiert ist. Innerhalb des Käfigs 13 ist ein Dreschrotor 16 angeordnet, dessen horizontale Achse 17 sich mit der Achse des Käfigs deckt. Das Erntematerial tritt in die Käfigöffnung 12 ein und wird durch die auf dem Rotor befestigten Dreschleisten 18 beaufschlagt, während es über den Dreschkorb 19 geführt wird. Die auf der Innenseite des Käfigs angeordneten spiralförmigen Rippen 21 bewirken, daß das Strohmaterial des Erntegutes sich im Käfig 13 axial zu einer nicht gezeigten Auswurföffnung hin bewegt, während der Rotor sich in Richtung des Pfeils 2o dreht. Das gedroschene Material, bestehend aus Korn, Spreu und kleinen Strohpartikeln, passiert die radialen Öffnungen 22 im Käfig 13 und fällt zwischen den Stangen 23 des Dreschkorbes hindurch auf eine horizontale quer liegende Verteilerschnecke 24, welche das ausgedroschene Material zu einem Paar sich gegeneinander drehender und vertikal verschobener Beschleunigungswalzen 26, 27 hin verteilt. Die Achse 31 der vorderen Beschleunigungswalze ist oberhalb der Achse 32 der hinteren Beschleunigungswalze vertikal verschoben. Das ausgedroschene Material wird vorwärts und abwärts zwischen den parallel liegenden Beschleunigungswalzen 26, 27 hindurch und durch eine Auswurföffnung 3o im Dreschsektor in Richtung des Pfeils 28 zum Reinigungssektor 35 befördert. Der Pfeil 28 verläuft im wesentlichen rechtwinklig zu einer geneigten Ebene 29 durch die horizontalen querliegenden Achsen 31, 32 der Beschleunigungswalzen 26, 27. Die Ebene 29 ist aufwärts und vorwärts in einem Winkel "d" von 15 Grad zu einer horizontalen Ebene geneigt, wie durch eine horizontale Wand 33 auf dem Hauptrahmen 36 der Erntemaschine dargestellt.

Ein querliegendes Gebläserad 41, das sich um eine querliegende horizontale Achse 42 dreht, befördert Druckluft durch einen unteren Reinigungskanal 43 zu den Sieben 44 des Reinigungsabschnittes 46 und durch einen oberen Kanal 47 hindurch.

Der obere Kanal wurde dadurch gefertigt, indem flache Metallbleche in s-förmige Wände 51, 52 gebogen wurden, die sich in Querrichtung zwischen den nicht gezeigten quer liegenden Wänden des Reinigungsteils 35 der Erntemaschine erstrecken. Nahe beim Austrittsteil des oberen Kanals 47 haben die Wände 51, 52 Endabschnitte in den Teilen 53, 54, von denen jedes in einem Winkel von 15Grad zum Horizont nach unten und nach hinten geneigt

- 8 -

ist. In anderen Worten, die Teile 53, 54 und der Austrittsteil des Kanals 47 sind parallel zu der durch die Achsen 31,32 der vertikal verschobenen Beschleunigungswalzen 26, 27 verlaufenden Ebene 29 angeordnet. So wird eine laminare Luftströmung aus dem Kanal in Richtung der Pfeile 55 erzeugt, die rechtwinklig zum Pfeil 28 liegen, welcher die Richtung des nach unten beschleunigten ausgedroschenen Materials darstellt.

## BETRIEB

Der nach unten und hinten gerichtete, aus dem oberen Kanal 47 austretende Luftstrom schneidet das beschleunigte Material rechtwinklig und strömt rückwärts durch das ausgedroschene Material hindurch, das Spreu und aus leichten Strohpartikeln bestehendes Material mit sich führt. Das beschleunigte Korn gelangt, weil es schwerer ist, nach unten in die Kornpfanne 61 des Rüttelförderers oder Schuhabschnittes 46, welches auch die Siebe 44 enthält, die hinter der Kornpfanne 61 angeordnet sind. Obwohl die Luft aus dem oberen Luftkanal 47 nach unten in Richtung der Siebe 44 strömt,

- 9 -

wird die aus dem unteren Kanal 43 ausstrebende Luft
nach oben durch die Siebe hindurch geblasen, wodurch
bewirkt wird, daß die Luft aus dem oberen Kanal sich
in einen horizontalen Luftstrom verwandelt und mithilft, daß die Bewegung zum rückwärtigen Auswerfen
der Spreu und leichten Strohpartikel unterstützt wird.
Indem die Luft aus dem oberen Kanal um 15 Grad abwärts
gelenkt wird, ist die Tendenz geringer, daß die Luft
nach oben durch die Beschleunigungswalzen 26, 27
strömt und es gibt im Bereich oberhalb der Kornpfanne,
wo sich die Luft mit dem beschleunigten, ausgedroschenen Material schneidet, weniger Turbulenz. So ist
der aus Kanal 47 kommende Luftstrom bei der Beseitigung
von Spreu und leichten Strohpartikeln aus dem Korn
effizienter als es der Fall wäre, wenn am Schnittpunkt
eine beträchtliche Turbulenz vorhanden wäre, wie es
der Fall bei der Konstruktion nach dem früheren Stand
der Technik war. Da es eine reduzierte Aufwärtsbewegung der Luft durch die Förderwalzen gibt, ist die am
vorderen Teil der Erntemaschine auftretende Luft weniger schmutzig, und es gibt weniger Verzögerung im
Fluß des ausgedroschenen Materials in Abwärtsrichtung
und durch die Beschleunigungswalzen hindurch.

0197292

- 1o -

Zusammenfassend wäre zu sagen, daß der Bereich des
Führerstandes am Vorderteil der Erntemaschine sauberer, die Maschinenkapazität höher und die Reinigungsleistung ebenfalls höher ist, wenn diese Erfindung für eine Erntemaschine verwendet wird.

- 11 -

Patentansprüche

1. Landwirtschaftliche Erntemaschine mit einem Dreschsektor mit einer auf einer im wesentlichen horizontal angeordneten Achse liegenden Dreschtrommel (16)
und einem unterhalb der Dreschtrommel angebrachten
Dreschkorb (19) und mit einem Reinigungssektor (35)
mit einer Kornpfanne (61) unterhalb des besagten
Dreschkorbes (19) und einem Sieb (44) hinter der
genannten Kornpfanne gekennzeichnet durch:
vordere und hintere sich gegeneinander drehende
Beschleunigungswalzen (26,27), die oberhalb der genannten Kornpfanne (61) und untenliegend in bezug
zu dem genannten Dreschkorb (19) angeordnet sind,
wobei die Beschleunigungswalzen auf einem Paar im
allgemeinen horizontal und parallel liegenden Achsen (31,32) angeordnet sind und zwischen sich aus dem genannten Dreschkorb (19) ausgedroschenes Material aufnehmen, wobei die Achse (31) der genannten vorderen Beschleunigungswalze (26) vertikal gesehen oberhalb der Achse (32) der hinteren Beschleunigungswalze (27) verschoben ist, wodurch das ausgedroschene Material in einer nach vorne und nach unten verlaufenden Richtung auf die genannte Kornpfanne (61) zu beschleunigt wird und einer Gebläseeinheit (41), die mit einem unteren Kanal (43), in welchem ein Luftstrom nach hinten und aufwärts durch das genannte Sieb (44) geführt wird, und mit einem oberen Kanal (47), welcher einen um eine bestimmte Entfernung unterhalb und parallel zu einer Ebene (29) durch die Achsen (31,32) der Beschleunigungswalzen (26,27) angeordneten Austrittsteil besitzt, versehen ist, welcher eine laminare Luftströmung (55) nach hinten und unten zu den genannten Sieben (44) sowie durch und quer zu dem ausgedroschenen Material führt, das von den genannten Beschleunigungswalzen abgegeben wird, wodurch die Spreu und Strohpartikel nach hinten von den Getreidekörnern weggeblasen werden, die nach unten auf die genannte Kornpfanne (61) gelangen.

- 14 -

2. Erntemaschine nach Anspruch 1, dadurch gekennzeichnet, daß der aus dem genannten unteren Kanal (43)
kommende und nach oben durch das Sieb (44) geführte
Luftstrom ausreicht, um zu verhindern, daß der Luftstrom aus dem oberen Kanal (47) Spreu und Strohpartikel, die abgetrennt wurden, auf das Sieb (44)
oben auftreffen läßt.

3. Erntemaschine aus Anspruch 1, dadurch gekennzeichnet, daß die Ebene (29) im wesentlichen um 15 Grad
zum Horizont geneigt ist.

0197292

Europäisches
Patentamt

**EUROPÄISCHER RECHERCHENBERICHT**

Nummer der Anmeldung

EP  86 10 2758

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-4 441 512  (BUSBOOM) <br> * Spalte 2, Zeile 61 - Spalte 3, Zeile 9; Figur 1 * | 1,2,3 | A 01 F  12/44 |
| P,A | EP-A-0 144 291  (LAVERDA) <br> * Insgesamt * | 1,2,3 | |
| D,A | US-A-4 270 551  (JOHNSTON) <br> * Insgesamt * | 1,2 | |
| A | FR-A-2 315 841  (ALLIS-CHALMERS) <br> * Seite 3, Zeile 6 - Seite 4, Zeile 16; Figur 1 * | 1,2 | |
| A | US-A-4 442 847  (BUCK) | | |
| | | | RECHERCHIERTE SACHGEBIETE (Int Cl 4) |
| A | FR-A-2 333 436  (VOGELENZANG) | | A 01 F |
| A | DE-B-1 083 586  (JEANTIL) | | |
| A | FR-A-1 215 745  (JEANTIL) | | |
| A | US-A-4 051 856  (REED) | | |

Der vorliegende Recherchenbericht wurde für alle Patentansprüche erstellt

| Recherchenort <br> DEN HAAG | Abschlußdatum der Recherche <br> 17-06-1986 | Prüfer <br> DE LAMEILLIEURE D. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82